# EUROPEAN PATENT APPLICATION

(11) **EP 1 138 204 A1**
(43) Date of publication of application: **04.10.2001**
(21) Application number: 01106386.4
(22) Date of filing: 19.03.2001
(51) Int. Cl.: A22C 17/00

(54) **Twin-blade incision apparatus for boning legs of ham**

(30) Priority: 23.03.2000 IT MI000605
(71) Applicant: M.B.A. - S.R.L., 42048 Rubiera (Reggio Emilia) (IT)
(72) Inventor: Biasetti, Marco, 42048 Rubiera (Prov.of Reggio Emilia) (IT); Guerze', Wainer, 41100 Modena (IT); Panciroli, Luciano, 42048 Rubiera (Prov.of Reggio Emilia) (IT)
(74) Representative: Modiano, Guido, Dr.-Ing.

(57) **Abstract**

An incision apparatus for ham legs (3), comprising a first blade (230), which is rigidly coupled to first actuation means (220) for moving it towards/away from the ham leg (3), and a second blade (241), movable with respect to the first blade (230) under the actuation of corresponding second actuation means (221).

## Description

The present invention relates to an incision apparatus for legs of ham comprising a first blade which is rigidly coupled to movement means for moving said blade towards and away from the leg of ham and a second blade movable with respect to the first blade under the actuation of corresponding controls.

As it is known, the production of legs of ham ready for cutting by the butcher and/or the consumer entails several steps for preparing the ham leg, including the extraction of the bone (boning) which is left inside the ham leg during seasoning.

In order to perform this boning automatically and with less risk for the operator, automatic machines have been provided which are substantially constituted by a station for loading and supporting the ham leg and by stations for forming an impression or incision at and for gouging the bone. These machines are disclosed, for example, in EP 0 753 260 by the same Applicant.

In greater detail, the impression or incision station of said machines allows to produce around the head of the bone of the ham leg a circular incision, such incision being obtained by means of a hollow cylindrical blade which, by penetrating the ham leg, provides the incision proximate to the head of the femur, which, by being set at an angle with respect to the bone, is cut by the passage of the incision blade, facilitating the subsequent penetration of the gouging blades.

Although it is functional, said incision device suffers from drawbacks arising from the fact that since the incision blade is cylindrical and has fixed dimensions, it cannot be adapted to the different bone shapes, causing imprecise incisions which affect the precision of the subsequent gouging step and therefore affect the final quality of the ham leg.

Moreover, the conventional blade penetrates with the same force both at the upper side of the ham, where cutting of the head of the bone is required, and at the lower side of the ham, where breakage of the bone is instead undesirable, since it disseminates splinters in the meat.

Accordingly, it has been found necessary to provide an incision device for legs of ham to be boned which is adapted to solve the above-mentioned problems of the prior art.

The aim of the present invention is to eliminate the above-mentioned drawbacks of conventional incision devices by providing an incision apparatus for ham legs which comprises a first blade, being rigidly coupled to means for moving it towards/away from the ham leg, and a second blade, movable with respect to the first blade under the actuation of corresponding controls.

Further characteristics and advantages will become better apparent from the following description of a preferred embodiment of a twin-blade incision apparatus for boning legs of ham, illustrated only by way of non-limitative example in the accompanying drawings, wherein:
Figure 1 is a schematic side view of a boning machine with an incision and gouging station;

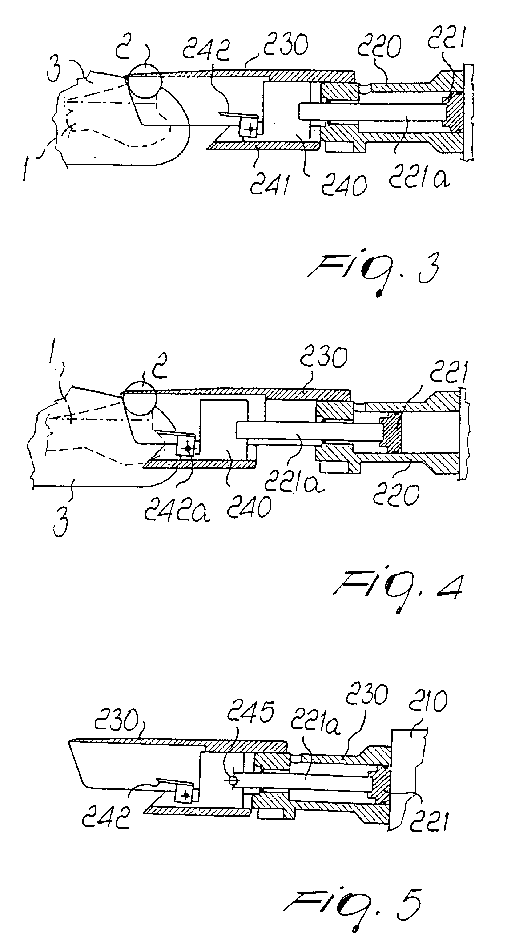

Figure 2 is a partial schematic sectional view of the incision device according to the invention during cycle startup;
Figure 3 is a schematic sectional view of the device of Figure 2, showing the upper blade in the penetration step;
Figure 4 is a schematic sectional view of the device of Figure 3, showing the lower blade in the penetration step; and
Figure 5 is a schematic sectional view of a further embodiment of the lower blade.

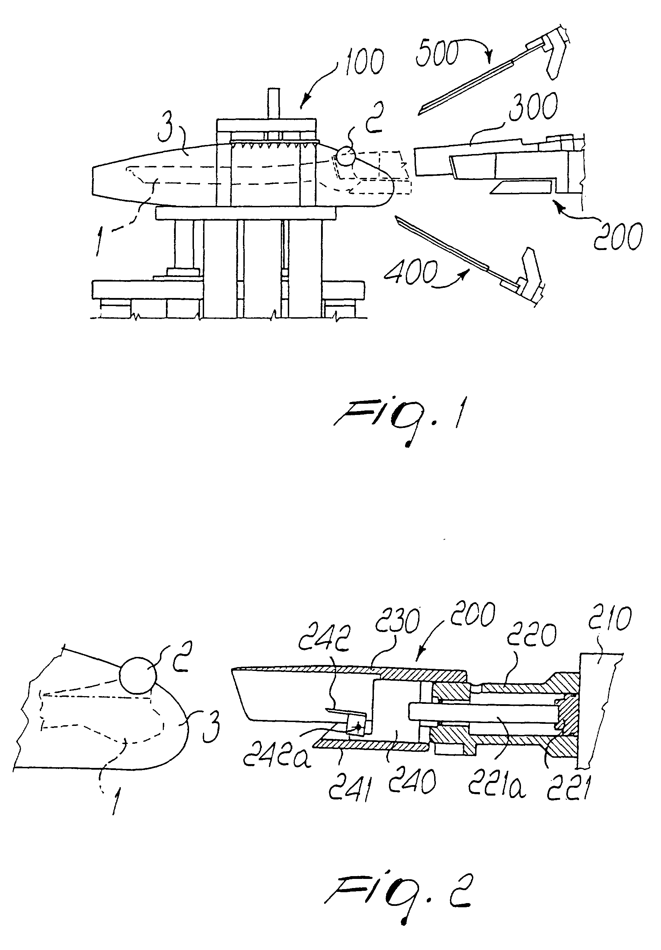

With reference to Figure 1, a machine for extracting a bone 1, with a head 2, from a ham leg 3 has a support, generally designated by 100, an incision or impression device 200, a lateral gouging device 300, a lower side gouging device 400 and an upper side gouging device 500.

In greater detail, the incision device 200 is constituted by a cylinder 220 being rigidly coupled to a supporting flange 210 which can perform a translation movement under the actuation of corresponding movement means known per se and therefore not shown.

A first upper blade 230 is rigidly coupled to said cylinder and is suitably arc-shaped and faceted with an inclination of approximately 15°.

The stem 221a of a piston 221 can move inside the cylinder 220; a support 240 is rigidly coupled to the outer free end of said stem 221a, and a second fixed blade 241 and a lamina 242 are mounted thereon; said lamina is rigid, is pivoted by means of a pivot 242a to the support 240 and is designed to retain the bone during subsequent cutting by the gouging devices 300, 400, 500.

Since the upper blade 230 and the lower blade 241 are independent, the penetration force of the upper blade 230 can be adjusted so as to allow to cut the head of the bone, while for the lower blade, which only has to cut the meat without splintering the bone, the actuation of the piston 221 can be adjusted with such a force that the blade 241 penetrates said meat but stops as soon as it makes contact with the bone 1.

The operation of the device is as follows:
after the ham leg has been positioned correctly by using conventional methods,
-- the movement means of the cylinder 220 are activated; by moving towards the ham leg 3, said cylinder acting as first actuation means causes the upper blade 230 to penetrate the ham leg, causing the first incision cut and the cutting of the head 2 of the bone 1;
-- the blade 230 is partially retracted by retracting the cylinder 220;
-- the piston 221, acting as second actuation means, is actuated in order to make the second lower blade 241 penetrate the ham leg; this advancement of the blade 241 also causes the contact of the lamina 242 with the bone 1, which is thus firmly retained for the subsequent gouging cut 300, 400, 500.

Once the lower cutting step for incision and the gouging cut have been performed, the cycle is complete and the entire device 200 is returned to the initial position and preset for a new cycle.

Figure 5 illustrates a further embodiment of the lower part of the incision unit; in this configuration, the support 240 of the lower blade 241 is connected to the movement stem 221a by means of a spherical joint 245 which allows the blade 241 to adapt with a certain tolerance to the shape of the bone once in contact with it.

This allows to further improve the incision precision regardless of the shape of the bone. Thanks to the above described apparatus an innovative method for the incision of legs of ham 3 to extract the bone 1 can be performed, which comprises the following steps:
-- correct positioning of the ham leg with respect to the incision apparatus;
-- activation of the actuation means of a first upper blade 230;
-- penetration of the upper blade 230 in the ham leg 3, and cutting of the head 2 of the bone 1;
-- partial retraction of the blade 230;
-- actuation of the second lower blade 241;
-- penetration of the second lower blade in the ham leg;
-- extraction of both blades, with return of the apparatus to the initial position.

In practice, it has been found that the incision apparatus and the method according to the invention, based on the differentiated and sequential action of an upper blade and of a lower blade, allow to perform a much more accurate incision than the prior art, in relation to the different ham leg shapes, thus increasing the gouging precision and the quality of the ham leg, since the production of splinters caused by the lower blade is also reduced.

The invention thus conceived is susceptible of numerous modifications and variations, all of which are within the scope of the appended claims.

All the details may further be replaced with other technically equivalent ones.

In practice, the materials used, as well as the shapes and the dimensions, may be any according to requirements without thereby abandoning the scope of the protection of the appended claims.

The disclosures in Italian Patent Application No. MI2000A000605 from which this application claims priority are incorporated herein by reference.

Where technical features mentioned in any claim are followed by reference signs, those reference signs have been included for the sole purpose of increasing the intelligibility of the claims and accordingly such reference signs do not have any limiting effect on the scope of each element identified by way of example by such reference signs.

## Claims

1. An incision apparatus for ham legs (3), comprising a first upper blade (230), which is rigidly coupled to first actuation means (220) for moving it towards/away from the ham leg (3), **characterized in that** it comprises a second lower blade (241), movable with respect to the first blade (230) under the actuation of corresponding second actuation means (221).

2. The apparatus according to claim 1, **characterized in that** said first actuation means of the first blade are constituted by a cylinder (220) which can perform a translation movement under the actuation of corresponding movement means.

3. The apparatus according to claim 1, **characterized in that** said second actuation means of the second blade (241) are constituted by a piston (221) which is internal to the cylinder (220).

4. The apparatus according to claim 3, **characterized in that** said second blade (241) is rigidly coupled to a support (240) being rigidly coupled to the stem (221a) of said piston (221).

5. The apparatus according to claim 4, **characterized in that** said support (240) of the lower blade (241) is connected to the stem by way of a joint (245).

6. The apparatus according to claim 1, **characterized in that** it comprises retention means (242) for retaining the bone (1) which are rigidly coupled to the support of the lower blade (241).

7. The apparatus according to claim 6, **characterized in that** said bone retention means are constituted by a lamina (242) which is hinged (242a) to the support (240) of the second blade (241).

8. A method for the incision of legs of ham (3) for extracting the bone (1) by way of a corresponding apparatus (200), comprising the following steps:
-- correct positioning of the ham leg with respect to the incision apparatus;
-- activation of first actuation means of a first upper blade (230);
-- penetration of the upper blade 230 in the ham leg (3), and cutting of the head (2) of the bone (1);
-- partial retraction of the blade (230);
-- actuation of the second lower blade (241);
-- penetration of the second lower blade in the ham leg;
-- gouging;
-- extraction of both blades, with resetting of the apparatus to the initial position.

9. The method according to claim 8, **characterized in that**, in the penetration step, the penetration force of the upper blade is greater than the penetration force of the lower blade.
